## Europäisches Patentamt

(19) **European Patent Office**

**Office européen des brevets**

(11) Veröffentlichungsnummer: **0 106 838**
**B1**

(12) # EUROPÄISCHE PATENTSCHRIFT

(45) Veröffentlichungstag der Patentschrift:
08.06.88

(51) Int. Cl.⁴: **B 60 C 11/00,** B 60 C 9/18

(21) Anmeldenummer: **83890174.2**

(22) Anmeldetag: **05.10.83**

(54) **Fahrzeugluftreifen mit einer Radialkarkasse, wobei der Laufflächenteil aus einer der Achse näheren Basisschicht mit einer darüber angeordneten Kronenschicht besteht.**

(30) Priorität: **20.10.82 AT 3851/82**

(43) Veröffentlichungstag der Anmeldung:
**25.04.84 Patentblatt 84/17**

(45) Bekanntmachung des Hinweises auf die Patenterteilung:
**06.06.88 Patentblatt 88/23**

(84) Benannte Vertragsstaaten:
**AT CH DE FR GB IT LI**

(56) Entgegenhaltungen:
**EP-A-0 067 111**
**DE-A-1 901 448**
**DE-A-2 362 627**
**DE-A-3 045 765**
**FR-A-2 343 617**
**GB-A-2 057 369**
**US-A-2 445 725**
**US-A-3 537 500**
**US-A-4 280 543**

(73) Patentinhaber: **Semperit Reifen Aktiengesellschaft, Wienersdorferstrasse 20- 24, A-2514 Traiskirchen (AT)**

(72) Erfinder: **Rampl, Alfred, Johann Wolfgang Goethestrasse 1, A-2525 Günselsdorf (AT)**

LIBER, STOCKHOLM 1988

## Beschreibung

Die Erfindung betrifft einen Fahrzeugluftreifen mit einer Radialkarkasse, zwei Seitenwandteilen, welche seitliche Bereiche der Karkasse überziehen, einem Laufflächenteil, der den Scheitelbereich der Karkasse abdeckt, und einem Gürtel aus zumindest einer gummierten Kordlage, der zwischen Laufflächenteil und dem Scheitelbereich der Karkasse eingebettet ist, wobei der Laufflächenteil aus einer der Achse näheren Basisschicht und einer darüber angeordneten Kronenschicht besteht, und wobei die Basisschicht einen Trog bildet, der die Kronenschicht zumindest teilweise aufnimmt.

Ein derartiger Fahrzeugluftreifen ist aus der US-PS-4 280 543 bekannt. Die einen Trog bildende Basisschicht des Laufflächenteiles ist so gestaltet, daß der Mittelbereich der die Profilierung aufweisenden Kronenschicht aufgenommen wird. Dieser Mittelbereich wird, insbesondere zur Verbesserung der Naßgriffeigenschaften, aus einem speziellen Polymer gefertigt.

Der Aufbau eines Laufflächenteiles aus Basisschicht und Kronenschicht entspricht im wesentlichen einem konventionellen Reifenaufbau, bei dem die Lauffläche "doubliert" ist, d.h., aus zwei Schichten besteht. Im Zusammenhang mit derartigen Laufflächen wurden verschiedene Patente und Patentanmeldungen veröffentlicht.

Die US-PS-3 157 218 beschreibt einen Reifen, dessen Lauffläche eine Basisschicht aufweist, die infolge ihrer chemischphysikalischen Eigenschaften eine zu starke Erwärmung durch die Walkbewegung vermeidet. Diese Konstruktion ist in etwas abgewandelter Weise bei Diagonalreifen bekannt, wird dort aber aus verfahrenstechnischen Gründen gewählt. Beim Diagonalreifen-Einstufenaufbau können nämlich die aus einem einzigen Halbzeug bestehenden Seitenwände auf die unbombierte Karkasse aufgebracht werden und erst darüber wird die eigentliche Lauffläche konfektioniert. Der unter dieser eigentlichen Lauffläche befindliche Teil des Seitenwand-Halbzeuges befindet sich somit in der Position einer Basisschicht.

Die US-PS-3 931 844 beschreibt einen Luftreifen, der unter der Lauffläche eine polsterförmige Unterlage aufweist, die weicher ist als die Gummimischung der eigentlichen Lauffläche, und die sich über die Reifenbreite erstreckt, wobei diese Unterlage im Bereich des Reifenäquators am dicksten ist, im Bereich der Schulter aber nur über sehr geringe Dicke verfügt. Durch diese Konstruktion soll ein gleichmäßiger Reifenabrieb und eine verbesserte Traktion erreicht werden.

Eine andere Konstruktion wird in der DE-OS-3 008 713 beschrieben. Dort wird eine zwischen dem Gürtel und der eigentlichen Lauffläche angeordnete Platte dargestellt, die über eine Shore Härte von etwa 40 bis 50 und eine Rückprallelastizität von etwa 60 bis 70 verfügt und dabei eine Breite besitzt, die etwa 60 bis 70 % der Breite des Gürtels entspricht. Die Aufgabe dieser Konstruktion ist es, den Rollwiderstand und die Wärmeentwicklung zu verringern.

Die DE-OS-3 046 716 beschreibt einen Reifen mit einer Lauffläche aus einer inneren und einer äußeren Lage, die einen unterschiedlichen Hysteresisverlustindex aufweisen. Die Aufgabe ist auch hier, den Abrollwiderstand des Reifens und dadurch den Energieverlust zu verringern. Gleichzeitig ist eine bestimmte geometrische Konfiguration beschrieben.

Die DE-OS 3 045 765 beschreibt ebenso eine geteilte Lauffläche, wobei die Basisschicht als Dämpfungskautschukschicht bezeichnet ist und einen Elastizitätsverlustmodul von 2 bis 12 kg/cm$^2$ und eine Rückprallelastizität von 60 bis 85 % aufweist. Auch bei dieser Konstruktion geht es um die Verbesserung der Abrolleigenschaften, ebenso wie bei der DE-OS-3 002 360, die auch eine Basis- und Kronenschicht beschreibt, die verschiedene Rückprallelastizitätswerte aufweisen.

Bekannt ist weiters bei Lastkraftwagen-Gürtelreifen die Anordnung einer als Bandagenpuffer bezeichneten Abdecklage aus dämpfungsintensivem Gummi. Wegen seiner Gürtelkantenschutzfunktion - oft besteht dieser Bandagenpuffer daher auch nur aus zwei über den Gürtelkanten angeordneten Streifen - weisen Gummimischungen, die dafür geeignet sind, eine sehr geringe Härte (z. B. 50 Shore A) und auch einen sehr geringen Spannungswert (z. B. $\sigma$ 150 = 1 MPa) auf. Diese "schlechten" Eigenschaften sind für die Funktion als Bandagenpuffer notwendig und stören wegen der geringen Dicke dieses Bauteiles (z. B. 2.4 mm) die Laufflächeneigenschaften nicht. Als Basisschicht wären solche Bandagenpuffermischungen nicht geeignet.

Die bekannten Reifenkonstruktionen stellen sich im wesentlichen die Aufgabe, den Abrollwiderstand und damit den Energieverlust möglichst gering zu halten und auch eine übermäßige Wärmeentwicklung während des Betriebes zu vermeiden. Diese Aufgabe wird durch die zitierten Reifenkonstruktionen teilweise erfüllt. Es hat sich allerdings herausgestellt, daß beim Kurvenfahren die angestrebte Verringerung des Abrollwiderstandes bei den bekannten Konstruktionen nicht zufriedenstellend erreicht wird. Dies ist besonders auch deshalb negativ, weil Gürtelreifen im Bereich der Schultern ihren höchsten Aufstandsdruck aufweisen und gerade dort die größten Beiträge zur Verringerung des Abrollwiderstandes erreichbar sind.

Ausgehend von diesem bekannten Stand des Wissens hat sich die vorliegende Erfindung nun die Aufgabe gestellt, einen Radialreifen der eingangs genannten Art derart zu gestalten, daß eine Verbesserung der Eigenschaften, insbesondere des Abrollverhaltens des Reifens in den Schulterpartien, wo im Vergleich zu den anderen Bereichen der Lauffläche beim Abrollvorgang eine stärkere mechanische Beanspruchung stattfindet, erzielbar ist. Dabei müssen diese durch die Basisschicht beeinflußten Eigenschaften nicht zwangsläufig nur zu Energieverlustminderung beim Abrollvorgang des Reifens beitragen, sondern es können auch - wie weiter unten angegeben - zusätzliche Aufgaben an diese Kombination Krone/Basis gestellt sein.

Die Aufgabe wird bei einem gattungsgemäßen Reifen durch die Erfindung dadurch gelöst, daß die Trogschultern der Basisschicht mehrteilig, - insbesondere zweiteilig, - ausgeführt sind.

Bei den Abrollvorgängen eines Reifens werden, wie schon ausgeführt, die Schulterpartien im Vergleich zu den anderen Bereichen der Lauffläche stärker mechanisch beansprucht. Durch die Mehrteilung, insbesondere die Zweiteilung der Basisschicht in diesem Bereich ist es möglich, diesen verschiedensten Beanspruchungen optimal zu begegnen.

So ist z. B. vorgesehen, daß die von der Umfangsmittelebene am weitesten entfernt liegenden Teile der Trogschultern aus einer Gummimischung bestehen, die der Gummimischung der Seitenwandteile sehr ähnlich oder mit dieser sogar identisch ist. Diese Ausführungsform führt neben den Vorteilen der trogförmigen Basisschicht zu der konstruktiv an sich bekannten Fertigungsmethode "Seitenwand über Lauffläche". Dadurch wird die Lauffläche fester mit der Seitenwand verbunden. Außerdem kann es dadurch kaum zu Laufflächenablösungen kommen, da der bei anderen Fertigungsmethoden vorhandene stumpfe, nach außen offene Stoß zwischen Lauffläche und Seitenwand fehlt, weil die Seitenwand, welche sich mit der Gummimischung der Trogschultern optimal verbindet, dadurch die Lauffläche überlappt.

Von dieser Trogkonstruktion ausgehend, sind nun verschiedenste, den unterschiedlichsten Anforderungen gerecht werdende Ausgestaltungen der vorliegenden Erfindung vorgesehen, die sich an den jeweils vom Reifen geforderten Eigenschaften, bzw. an dessen Herstellungsmöglichkeiten orientieren.

Um die bezweckten Effekte deutlich auszuprägen, ist es zweckmäßig, wenn der Anteil des Querschnittes der Basisschicht am Gesamtquerschnitt des Laufflächenteils mindestens 30 %, - vorzugsweise mindestens 40 %, - beträgt.

Gemäß einer weiteren Ausgestaltung der Erfindung besteht die Basisschicht aus einer Gummimischung, die eine Shore Härte (nach DIN 53505 bzw. ÖNORM C 9432) von 60 bis 80 Shore-A und einen Spannungswert σ 150 (nach DIN 53504 bzw. ÖNORM C 9431) 4 bis 9 MPa aufweist, während die Kronenschicht aus einer relativ weichen Gummimischung mit einer Shore Härte von 55 bis 75 Shore-A und einem Spannungswert σ 150 von 2 bis 6 MPa besteht, wobei die Shore-Härte der Basismischung um mindestens drei Punkte größer ist als die der Kronenmischung.

Diese Ausgestaltung eines Fahrzeugluftreifens bewirkt ein relativ gutes Handling, da die Basismischung härter und gleichzeitig elastischer ist, während die Kronenmischung etwas weicher ist und dadurch bessere Traktionseigenschaften aufweist. Dies bedeutet, daß der Reifen exakter auf Lenkimpulse reagiert.

Gemäß einer anderen Ausgestaltung der Erfindung besteht die Basisschicht aus einer Gummimischung mit einer Shore Härte von 50 bis 70 Shore-A, während die Kronenschicht aus einer relativ härteren Gummimischung mit 60 bis 80 Shore-A besteht, wobei die Härte der Kronenschicht zumindest drei Punkte größer ist als jene der Basisschicht.

Eine ähnliche Konstruktion ist bereits aus der US-PS-3 931 844 bekannt geworden, jedoch soll bei dieser zitierten Konstruktion durch die im Bereich des Reifenäquators konzentrierte weichere Basisschicht ein gleichmäßiger Abrieb erzeugt und außerdem sollen die Griffeigenschaften verbessert werden. Bei der vorliegenden Ausgestaltung der erfindungsgemäßen Laufflächenkonstruktion hingegen bewirkt die weichere, trogförmige Basisschicht ein geringfügig verzögertes Handling, was zwar für Hochgeschwindigkeitsfahrten einen gewissen Nachteil bildet, andererseits aber ein ähnlich weiches Fahrverhalten mit großem Komfort wie mit einem Diogonalreifen ermöglicht, was wiederum für bestimmte Verwendungszwecke gewünscht wird. Durch die weichere Basisschicht wird zusätzlich ein geräuschmindernder Effekt bewirkt, da die Stöße der Fahrbahn gegen den Reifen gedämpft werden.

Außerdem ergibt sich vorteilhafterweise ein günstiges Bremsverhalten, indem die Basisschicht, welche die Bremskräfte von der Karkasse auf die härtere Kronenschicht überträgt, geringfügig verzögernd wirkt.

Die Rollwiderstandswerte und insbesondere auch die Griffeigenschaften sind dann besonders günstig, wenn die Basisschicht entsprechend einer weiteren Ausgestaltung der Erfindung bei 100° C einen tan δ < als 0,1 - vorzugsweise von 0,03 bis 0,08 - aufweist, während die Kronenschicht einen tan δ > als 0,1 - vorzugsweise von 0,14 bis 0,20 - aufweist. Die Ermittlung von tan δ erfolgt dabei mit dem "ELASTODYN"-Gerät (Bauart Göttfert) in Anwendung der DIN 53513, wobei tan δ der Quotient aus dem Verlustmodul E'' gebrochen durch den Speichermodul E' ist.

$$\tan \delta = \frac{E''}{E'}$$

Damit einher geht auch eine geringere Temperaturentwicklung im Inneren der Lauffläche beim Betrieb.

Nach einer weiteren Ausgestaltung der Erfindung entspricht die Kronenmischung einer konventionellen Laufflächenmischung, die Basismischung jedoch ist weniger abrieb- und ozonbeständig sowie mit kostengünstigeren Rohstoffen, wie z. B. Reifenregenerat usw. aufgebaut, wobei der Spannungswert δ 150 der Basismischung sowie die Shore Härte mindestens gleich hoch ist dem Spannungswert δ 150 bzw. der Shore Härte der Kronenmischung, vorzugsweise jedoch höher liegt. Dieser Aufbau ermöglicht eine Verbilligung des Reifens, ohne daß dabei die Funktionstauglichkeit verringert wird.

Aus dem gleichen Grund wurde auch eine weitere Ausgestaltung der Erfindung kreiert, gemäß der die Basismischung im Prinzip aus den gleichen Hauptbestandteilen wie die Kronenmischung besteht, wobei jedoch in der Basismischung keine speziell griffverbessernden Bestandteile sowie keine Alterungsschutzmittel vorgesehen sind. In der heutigen Reifentechnologie sind insbesondere Mischungsbestandteile zur Griffverbesserung hochwertige und kostenintensive Rohstoffe, die ebenso wie die Schutzmittel gegen Ozon und UV-Strahlen lediglich in jenen Reifenteilen eingesetzt werden müssen, die sich an der äußeren Oberfläche des Reifens befinden.

Nach einer anderen Ausgestaltung der vorliegenden Erfindung besteht die Basismischung aus den gleichen Hauptbestandteilen wie die Gürtelaufpreßmischung, wobei jedoch - aus Kostengründen - kein Haftsystem zur Verbesserung der Kordhaftung beigemengt ist. Vor allem bei Reifen, die größten Walkbeanspruchungen ausgesetzt sind, zeigt sich diese Konstruktion als sehr vorteilhaft, da durch die Basismischung eine optimale Verbindung zwischen Kronenmischung und Gürtelaufpreßmischung hergestellt wird und dadurch die Vulkanisation zwischen der Laufläche und dem Gürtel bestens erfolgen kann. Eine Laufflächenablösung wird dadurch auch bei härtester Beanspruchung vermieden.

Weiters wird durch diese Ausgestaltung der Erfindung auch verhindert, daß wesentliche Bestandteile der Gürtelaufpreßmischung, z. B. Schwefel, Beschleuniger, vor der Vulkanisation in eine die Haftung zwischen Gürtelaufpreßmischung und Stahlkord schädigenden Weise herausdiffundieren. Dies deshalb, weil bezüglich dieser Bestandteile zwischen Gürtelaufpreßmischung und Basismischung kein Konzentrationsgefälle besteht.

Eine andere Ausführungsvariante der Erfindung besteht darin, daß sowohl die Basismischung als auch die Kronenmischung aus einer hochelastischen rutschsicheren Kautschukmischung aufgebaut sind, wobei jedoch in der Basismischung in geringeren Anteilen Produktionsrücklieferungen zugemengt sind. Dadurch ergibt sich eine wirtschaftlich vorteilhafte Recyclingmöglichkeit.

Ein weiteres Problem bei der Benützung von Reifen entsteht durch die Beschädigung der Reifen durch Eindringen von harten Teilchen, wie z. B. spitzen Steinen oder ähnlichem. Um diesen Umstand entgegenzuwirken, weist gemäß einer anderen besonderen Ausgestaltung der Erfindung die Basismischung eine Eindringenergie von mindestens 90 mJ auf und hat dabei eine um mindestens 10 % größere Eindringenergie als die Kronenmischung. Dies bedeutet, daß ein eindringender Stein in der Regel nicht durch die Basismischung wandert, und somit nicht, wie es sonst zuweilen geschieht, durch die Laufläche bis in die Gürtelschicht vordringen kann.

Für die Bestimmung der Eindringenergie wird eine Stahlnadel von bestimmtem Durchmesser und parabolischer Spitze verwendet. Der Eindringvorgang wird bei konstanter Vorschubgeschwindigkeit der Stahlnadel durchgeführt und ein Kraftdehnungs-Diagramm aufgezeichnet. Das Auftreten von Bruchvorgängen unterhalb der Nadelspitze äußert sich in einer Unstetigkeit des Kurvenverlaufes. Die bis dahin aufgebrachte Verformungsenergie E (mJ) wird nach der Formel

$$E_e = \int_o^{s_e} F \cdot ds$$

bestimmt, wobei F die Eindringkraft (N), s den Eindringweg (mm) und Index e das Auftreten des Bruches darstellen.

Gemäß einem Verfahren zur Herstellung eines erfindungsgemäßen Fahrzeugluftreifens können die Basismischung und die Kronenmischung gleichzeitig extrudiert und nach dem Extrudieren im noch warmen Zustand miteinander verbunden werden. Nach diesem Verfahren hergestellte Laufflächen können, wie für einteilige Laufflächen üblich, weiter konfektioniert werden.

Nach einem anderen besonderen Verfahren zur Herstellung eines erfindungsgemäßen Fahrzeugluftreifens werden die Basismischung und die Kronenmischung getrennt hergestellt, wobei die Trogschultern an der der Kronenschicht zugeordneten Seite zurückspringend ausgebildet werden und anschließend die Kronenschicht durch Einschieben in die Basisschicht eingebracht wird.

Nach einem weiteren besonderen Verfahren zur Herstellung eines erfindungsgemäßen Fahrzeugluftreifens werden gleichzeitig in einem Spritzvorgang mit entsprechender Verformung sämtliche, die Karkasse umhüllenden Gummischichten gespritzt und hernach über die vorgefertigte Karkasse konfektioniert Dieses Verfahren ermöglicht eine neue Methode zur Herstellung eines Fahrzeugluftreifens, wobei es mit großen Zeiteinsparung im Vergleich zu herkömmlichen Verfahren verbunden ist und außerdem eine größtmögliche Automatisierung des Konfektionsvorganges ermöglicht.

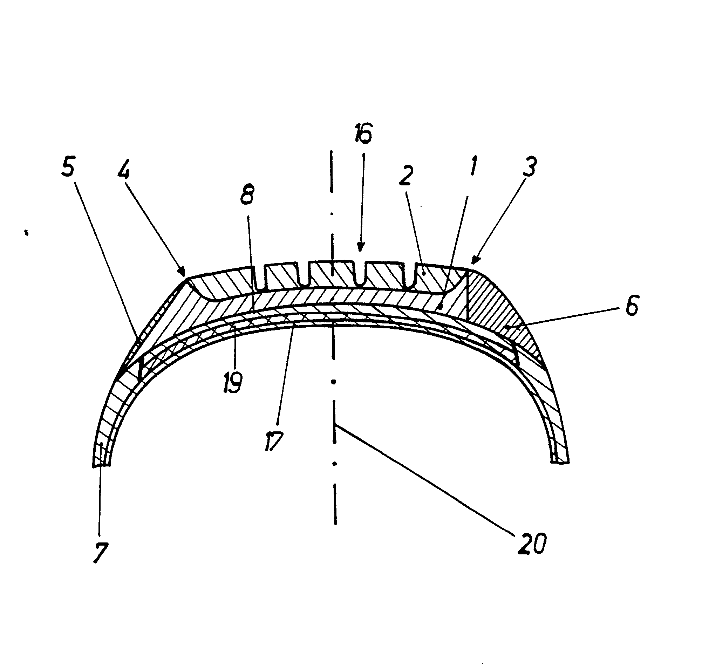

Anhand der einzigen Zeichnung, die einen Querschnitt durch den radial äußeren Teil eines Luftreifens darstellt, wird nun die Erfindung näher erläutert

Der Fahrzeugluftreifen weist eine Karkasse 17, auf der seitlich die Seitenwände 7 angeordnet sind, auf, während der radial äußere Bereich der Karkasse 17 durch mindestens zwei Gürtellagen 8, 19 abgedeckt ist und über diesen Gürtellagen 8, 19 der Laufflächenteil 16 angeordnet ist. Der Laufflächenteil 16 besteht aus einer Basisschicht 1 und einer Kronenschicht 2. Die Basisschicht 1 ist dabei trogförmig gestaltet, so daß sie die Kronenschicht 2, die den fahrbahnberührenden Teil der Lauffläche bildet, seitlich teilweise umfaßt. Es ist dabei deutlich, daß die Basismischung den größtmöglichen Volumensanteil am Laufflächenteil hat, wodurch die chemisch-physikalischen Eigenschaften der Basismischung am stärksten auf die Fahreigenschaften des Fahrzeugluftreifens wirken können.

Die beiden Hälften der Zeichnungsfigur zeigen nun unterschiedliche Ausführungsvarianten von zweiteilig ausgeführten Trogschultern 3, 4. In der linken Hälfte der Zeichnungsfigur ist der von der Umfangsmittelebene 20 am weitesten entfernte Teil 5 vorzugsweise aus derselben Gummimischung wie die Seitenwand 7 aufgebaut. Auf der rechten Seite derselben Figur ist ebenso eine zweigeteilte Basisschicht 1 dargestellt, die im Bereich der Trogschulter 3 eine Teilung aufweist, wobei auf dieser Hälfte ein größerer Anteil 6 mit einer anderen Gummimischung oder aber auch aus produktionstechnischen Gründen mit der gleichen Gummimischung wie der Hauptteil der Basisschicht 1, aufgebaut ist.

Es wird darauf verwiesen, daß es im Rahmen der Erfindung sowohl möglich ist, die Dicke der Basisschicht so zu wählen, daß diese während des Reifenlebens nie in Kontakt mit der Fahrbahn gerät, das heißt, daß bis zur gesetzlichen Mindestprofiltiefe immer nur auf der Kronenschicht gefahren wird, oder daß man die Dicke der Basisschicht im Verhältnis zur Kronenschicht so wählt, daß diese nach einer gewissen km-Leistung selbst fahrbahnberührend wird. Es versteht sich von selbst, daß die Basismischung in letzterem Fall entsprechende Laufflächeneigenschaften (z. B. Trocken- und Naßgriff, Abrieb, etc.) aufweisen muß.

**Patentansprüche**

1. Fahrzeugluftreifen mit einer Radialkarkasse (17), zwei Seitenwandteilen (7), welche seitliche Bereiche der Karkasse überziehen, einem Laufflächenteil (16), der den Scheitelbereich der Karkasse abdeckt und einem Gürtel (8, 19) aus zumindest einer gummierten Kordlage, der zwischen dem Laufflächenteil (16) und dem Scheitelbereich der Karkasse eingebettet ist, wobei der Laufflächenteil (16) aus einer der Achse näheren Basisschicht (1) und einer darüber angeordneten Kronenschicht (2) besteht, und wobei die Basisschicht (1) einen Trog bildet, der die Kronenschicht (2) zumindest teilweise aufnimmt, dadurch gekennzeichnet, daß die Trogschultern (3, 4) der Basisschicht (1) mehrteilig, - insbesondere zweiteilig, - ausgeführt sind.

2. Fahrzeugluftreifen nach Anspruch 1, dadurch gekennzeichnet, daß die vom Reifenäquator am weitesten entfernt liegenden Teile (5, 6) der Trogschultern (3, 4) aus einer Gummimischung bestehen, die der Gummimischung der Seitenwandteile (7) ähnlich oder mit dieser identisch ist.

3. Fahrzeugluftreifen nach Anspruch 1, dadurch gekennzeichnet, daß der Anteil des Querschnittes der Basisschicht (1) am Gesamtquerschnitt des Laufflächenteils (16) mindestens 30 %, - vorzugsweise mindestens 40 %, - beträgt.

4. Fahrzeugluftreifen nach einem der Ansprüche 1 bis 3, dadurch gekennzeichnet, daß die Basisschicht (1) aus einer Gummimischung besteht, die eine Shore Härte von 60 bis 80 Shore-A und einem Spannungswert $\sigma$ 150 von 4 bis 9 MPa aufweist, während die Kronenschicht (2) aus einer relativ weichen Gummimischung mit einer Shore Härte von 55 bis 75 Shore-A und einem Spannungswert $\sigma$ 150 von 2 bis 6 MPa besteht, wobei die Shore Härte der Basismischung um mindestens drei Punkte größer ist, als jene der Kronenmischung.

5. Fahrzeugluftreifen nach einem der Ansprüche 1 - 3, dadurch gekennzechnet, daß die Basisschicht (1) aus einer Gummimischung mit einer Shore Härte von 50 bis 70 Shore-A besteht, während die Kronenschicht (2) aus einer relativ härteren Gummimischung mit einer Shore Härte von 60 bis 80 Shore-A besteht, wobei die Härte der Kronenschicht (2) mindestens um drei Punkte größer ist als jene der Basisschicht (1).

6. Fahrzeugluftreifen nach einem der vorhergehenden Ansprüche, dadurch gekennzeichnet, daß die Basisschicht (1) bei 100° C einen tan $\delta$ < 0,1, - vorzugsweise von 0,03 bis 0,08, - aufweist, während die Kronenschicht (2) einen tan $\delta$ > 0,1, - vorzugsweise von 0,14 bis 0,20, - aufweist.

7. Fahrzeugluftreifen nach einem der vorhergehenden Ansprüche, dadurch gekennzeichnet, daß die Basismischung im Prinzip aus den gleichen Hauptbestandteilen besteht wie die Kronenmischung, daß jedoch keine Polymere zur Griffverbesserung sowie keine laufflächenspezifischen Alterungsmittel vorgesehen sind.

8. Fahrzeugluftreifen nach einem der Ansprüche 1 - 4 und 7, dadurch gekennzeichnet, daß die Basismischung im Prinzip aus den gleichen Hauptbestandteilen wie die Kronenmischung besteht, daß sie jedoch mengenmäßig mehr kostengünstigere Rohstoffe, wie z. B. Reifenregenerat u. dgl., aufweist, wobei der Spannungswert $\sigma$ 150 der Basismischung sowie die Shore Härte mindestens gleich hoch dem Spannungswert δ 150 bzw. der Shore Härte der Kronenmischung ist.

9. Fahrzeugluftreifen nach einem der vorhergehenden Ansprüche, dadurch gekennzeichnet, daß die Basismischung aus den gleichen Bestandteilen aufgebaut ist wie die Gürtelaufpreßmischung.

10. Fahrzeugluftreifen nach Anspruch 9, dadurch gekennzeichnet, daß kein Haftsystem zur verbesserten Kordhaftung vorgesehen ist.

11. Fahrzeugluftreifen nach einem der vorhergehenden Ansprüche, dadurch gekennzeichnet, daß sowohl die Kronenmischung als auch die Basismischung aus einer hoch elastischen, rutschsicheren Kautschukmischung aufgebaut sind, daß jedoch in der Basismischung die Produktionsrücklieferungen der Laufflächenherstellung zugemengt sind.

12. Fahrzeugluftreifen nach einem der vorhergehenden Ansprüche, dadurch gekennzeichnet, daß die Basismischung über eine Eindringenergie von mindestens 90 mJ verfügt und daß die Eindringenergie der Basismischung mindestens 10 % größer ist als die der Kronenmischung.

13. Verfahren zur Herstellung eines Fahrzeugluftreifens nach einem der Ansprüche 1 - 12, dadurch gekennzeichnet, daß die Basismischung und die Kronenmischung gleichzeitig extrudiert werden und nach dem Extrudieren noch im warmen Zustand verbunden werden.

14. Verfahren zur Herstellung eines Fahrzeugluftreifens nach einem der Ansprüche 1 - 12, dadurch gekennzeichnet, daß die Basismischung und die Kronenmischung getrennt hergestellt werden, wobei die Trogschultern an der der Kronenschicht zugeordneten Seite zurückspringend ausgebildet werden und anschließend die Kronenschicht durch Einschieben in die Basisschicht eingebracht wird.

15. Verfahren zur Herstellung eines Fahrzeugluftreifens nach einem der Ansprüche 1 -12, dadurch gekennzeichnet, daß gleichzeitig in einem Spritzvorgang mit entsprechender Vorformung sämtliche den Reifen umhüllende Gummischichten gespritzt werden und hernach über die vorgefertigte Karkasse konfektioniert werden.

## Claims

1. Vehicle pneumatic tyre with a radial carcass (17), two side-wall parts (7) covering lateral regions of the carcass, a tread part (16) covering the vertex region of the carcass, and a belt (8, 19) consisting of at least one rubberised cord ply and embedded between the tread part (16) and the vertex region of the carcass, the tread part (16) consisting of a base layer (1) nearer the axis and of a crown layer (2) arranged above the latter, and the base layer (1) forming a trough at least partially receiving the crown layer (2), characterised in that the trough shoulders (3, 4) of the base layer (1) are of multi-part, especially two-part, construction.

2. Vehicle pneumatic tyre according to Claim 1, characterised in that those parts (5, 6) of the trough shoulders (3, 4) which are furthest away from the tyre equator consist of a rubber mixture which is similar or identical with the rubber mixture of the side-wall parts (7).

3. Vehicle pneumatic tyre according to Claim 1, characterised in that the proportion of the cross-section of the base layer (1) in the total cross-section of the tread part (16) is at least 30 %, preferably at least 40 %.

4. Vehicle pneumatic tyre according to one of Claims 1 to 3, characterised in that the base layer (1) consists of a rubber mixture which has a Shore hardness of 60 to 80 Shore A and a tensile strength σ 150 of 4 to 9 MPa, whilst the crown layer (2) consists of a relatively soft rubber mixture with a Shore hardness of 55 to 75 Shore A and a tensile stress σ 150 of 2 to 6 MPa, the Shore hardness of the base mixture being at least three points higher than that of the crown mixture.

5. Vehicle pneumatic tyre according to one of Claims 1 to 3, characterised in that the base layer (1) consists of a rubber mixture with a Shore hardness of 50 to 70 Shore A, whilst the crown layer (2) consists of a relatively harder rubber mixture with a Shore hardness of 60 to 80 Shore A, the hardness of the crown layer (2) being at least three points higher than that of the base layer (1).

6. Vehicle pneumatic tyre according to one of the preceding Claims, characterised in that, at 100°C, the base layer (1) has a tan δ < 0.1, preferably from 0.03 to 0.08, whilst the crown layer (2) has a tan δ > 0.1, preferably from 0.14 to 0.20.

7. Vehicle pneumatic tyre according to one of the preceding Claims, characterised in that the base mixture consists, in principle, of the same main constituents as the crown mixture, but that no polymers for improving the grip and no anti-ageing agents specific to the tread are provided.

8. Vehicle pneumatic tyre according to one of Claims 1 to 4 and 7, characterised in that the base mixture consists, in principle, of the same main constituents as the crown mixture, but in terms of quantity has more cheaper raw materials, such as, for example, reclaimed tyre waste and the like, the tensile stress σ 150 of the base mixture and the Shore hardness being at least equal to the tensile stress σ 150 and Shore hardness of the crown mixture.

9. Vehicle pneumatic tyre according to one of the preceding Claims, characterised in that the base mixture is composed of the same constituents as the belt press-on mixture.

10. Vehicle pneumatic tyre according to Claim 9, characterised in that no bonding system for improved cord adhesion is provided.

11. Vehicle pneumatic tyre according to one of the preceding Claims, characterised in that both the crown mixture and the base mixture are made of a highly elastic anti-slip rubber mixture, but that reclaimed production waste from the tread production is added to the base mixture.

12. Vehicle pneumatic tyre according to one of the preceding Claims, <u>characterised in</u> that the base mixture has a penetration energy of at least 90 mJ, and the penetration energy of the base mixture is at least 10 % higher than that of the crown mixture.

13. Process for producing a vehicle pneumatic tyre according to one of Claims 1 to 12, <u>characterised in</u> that the base mixture and the crown mixture are extruded simultaneously and, after extrusion, are joined in the still hot state.

14. Process for producing a vehicle pneumatic tyre according to one of Claims 1 to 12, <u>characterised in</u> that the base mixture and the crown mixture are made separately, the trough shoulders being formed set-back on the side assigned to the crown layer, and the crown layer subsequently being introduced by being inserted into the base layer.

15. Process for producing a vehicle pneumatic tyre according to one of Claims 1 to 12, <u>characterized in</u> that all the rubber layers enveloping the tyre are injection-moulded simultaneously in one injection-moulding operation, together with appropriate preshaping, and are then built-up over the prefabricated carcass.

**Revendications**

1. Pneumatique pour véhicule automobile comprenant une carcasse radiale (17), deux parties de parois latérales (7) qui recouvrent les régions latérales de la carcasse, une partie (16) formant bande de roulement qui recouvre la région de sommet de la carcasse, et une ceinture (8, 19) constituée par au moins une couche câblée enrobée de gomme, qui est noyée entre la partie (16) formant la bande de roulement et la région de sommet de la carcasse, la partie (16) formant bande de roulement étant constituée par une couche de base (1) située le plus près de l'essieu et par une couche de couronne (2) disposée au-dessus, et la couche de base (1) formant une auge qui reçoit au moins en partie la couche de couronne (2), caractérisé en ce que les épaulements (3, 4) de l'auge de la couche de base (1) sont constitués en plusieurs parties, et notamment en deux parties.

2. Pneumatique pour véhicule automobile selon la revendication 1, caractérisé en ce que les parties (5, 6) des épaulement (3, 4) de l'auge qui sont situés le plus loin de l'équateur du pneumatique sont constituées par un mélange de gomme qui est analogue au mélange de gomme des parties (7) formant les parois latérales, ou qui est même identique à celui-ci.

3. Pneumatique pour véhicule automobile selon la revendication 1, caractérisé en ce que la fraction de la section transversale de la couche (1) par rapport à la section transversale totale de la partie (16) formant la bande de roulement est d'au moins 30 %, et de préférence d'au moins 40 %.

4. Pneumatique pour véhicule automobile selon l'une quelconque des revendications 1 à 3, caractérisé en ce que la couche de base (1) est réalisée en un mélange de gomme présentant une dureté Shore de 60 à 80 Shore-A et une valeur de contrainte de traction $\sigma$ 150 de 4 à 9 MPa, alors que la couche de couronne (2) est constituée par un mélange de gomme relativement mou présentant une dureté Shore de 55 à 75 Shore-A et une valeur de contrainte de traction $\sigma$ 150 de 2 à 6 MPa, la dureté Shore du mélange de base étant supérieure d'au moins trois points à celle du mélange de couronne.

5. Pneumatique pour véhicule automobile selon l'une quelconque des revendications 1 à 3, caractérisé en ce que la couche de base (1) est constituée par un mélange de gomme ayant une dureté Shore de 50 à 70 Shore-A, alors que la couche de couronne (2) est constituée par un mélange de gomme relativement plus dur et ayant une dureté Shore de 60 à 80 Shore-A, la dureté de la couche de couronne étant supérieure d'au moins trois points à celle de la couche de base (1).

6. Pneumatique pour véhicule automobile selon l'une quelconque des revendications précédentes, caractérisé en ce que la couche de base (1) présente, pour une température de 100°C, une tan $\delta < 0,1$, et de préférence comprise entre 0,03 et 0,08, alors que la couche de couronne (2) présente une tan $\delta > 0,1$ et de préférence comprise entre 0,14 et 0,20.

7. Pneumatique pour véhicule automobile selon l'une quelconque des revendications précédentes, caractérisé en ce que le mélange de base est constitué en principe au moyen des mêmes composants principaux que la couche de couronne, en ce que cependant aucun polymère pour améliorer d'adhérence ainsi qu'aucun moyen spécifique de lutte contre le vieillissement de la bande de roulement ne sont prévus.

8. Pneumatique pour véhicule automobile selon l'une quelconque des revendications 1 à 4 et 7, caractérisé en ce que le mélange de base est constitué en principe des mêmes composants principaux que le mélange de couronne, en ce qu'il comprend cependant en quantité des matières premières plus économiques, telles que du caoutchouc régénéré et analogues, la valeur de la contrainte de traction $\sigma$ 150 du mélange de base ainsi que la dureté Shore étant au moins aussi élevées que la valeur de la contrainte de traction $\sigma$ 150 ou la dureté Shore du mélange de couronne.

9. Pneumatique pour véhicule automobile selon l'une quelconque des revendications précédentes, caractérisé en ce que le mélange de base est constitué des mêmes composants que le mélange sous pression de la ceinture.

10. Pneumatique pour véhicule automobile selon la revendication 9, caractérisé en ce qu'il n'est prévu aucun système de retenue pour améliorer l'adhérence de la couche câblée.

11. Pneumatique pour véhicule automobile selon l'une quelconque des revendications précédentes, caractérisé en ce qu'aussi bien le mélange de couronne que le mélange de base sont constitués par un mélange de caoutchouc très élastique et antidérapant, et en ce que cependant des retours de production venant de la fabrication de la bande de roulement sont ajoutés au mélange de base.

12. Pneumatique pour véhicule automobile selon l'une quelconque des revendications précédentes, caractérisé en ce que le mélange de base présente une énergie de pénétration d'au moins 90 mJ et en ce que l'énergie de pénétration du mélange de base est supérieure d'au moins 10 % à celle du mélange de couronne.

13. Procédé de fabrication d'un pneumatique pour véhicule automobile selon l'une quelconque des revendications 1 à 12, caractérisé en ce que le mélange de base et le mélange de couronne sont extrudés simultanément et sont reliés l'un à l'autre quand ils sont encore à l'état chaud après l'extrusion.

14. Procédé de fabrication d'un pneumatique pour véhicule automobile selon l'une quelconque des revendications 1 à 12, caractérisé en ce que le mélange de base et le mélange de couronne sont réalisés séparément, les épaulements de l'auge sur le côté qui est associé à la couche de couronne étant constitués de façon à revenir élastiquement en position et la couche de couronne étant ensuite montée dans la couche de base par enfoncement.

15. Procédé de fabrication d'un pneumatique pour véhicule automobile selon l'une quelconque des revendications 1 à 12, caractérisé en ce que toutes les couches de gomme entourant le pneumatique sont injectées simultanément au cours d'une opération d'injection, avec préformage approprié, et sont ensuite montées sur la carcasse préfabriquée.